# EUROPÄISCHE PATENTSCHRIFT

(11) **EP 1 462 308 B1**
(45) Veröffentlichungstag und Bekanntmachung des Hinweises auf die Patenterteilung: **16.01.2008**
(21) Anmeldenummer: 04006628.4
(22) Anmeldetag: 19.03.2004
(51) Int. Cl.: B60Q 1/04, B62D 25/08, B62D 21/15

(54) **Fahrzeugkarosserie mit einem Scheinwerfergehäuse mit einer integrierten Strukturstrebe**
Vehicle bodywork with a housing for a headlamp with an integrated strut
Carrosserie automobile avec un boîtier pour projecteur avec une traverse intégrée

(30) Priorität: 28.03.2003 DE 10314091
(43) Veröffentlichungstag der Anmeldung: 29.09.2004
(73) Patentinhaber: ADAM OPEL AG, 65423 Rüsselsheim (DE)
(72) Erfinder: Bechtold, Ralf-Dieter, 55278 Weinolsheim (DE); Fritzinger, Jörg, 64569 Nauheim (DE); Hewitt, Susanne, 64807 Dieburg (DE); Kathmann, Jörg, 64569 Nauheim (DE)

(56) Entgegenhaltungen:
- EP-A- 0 620 137
- WO-A-02/102645
- DE-U1- 8 815 885
- FR-A- 2 818 605
- US-A1- 2002 015 310
- PATENT ABSTRACTS OF JAPAN Bd. 2002, Nr. 04, 4. August 2002 (2002-08-04) -& JP 2001 341668 A (YACHIYO INDUSTRY CO LTD), 11. Dezember 2001 (2001-12-11)
- PATENT ABSTRACTS OF JAPAN Bd. 2003, Nr. 05, 12. Mai 2003 (2003-05-12) -& JP 2003 011848 A (NISSAN MOTOR CO LTD), 15. Januar 2003 (2003-01-15)

## Beschreibung

Die Erfindung bezieht sich auf eine Fahrzeugkarosserie mit einem Scheinwerfergehäuse gemäß dem Oberbegriff des Anspruches 1.

Eine derartige Fahrzeugkarosserie ist in der WO 02/102645 beschrieben. Das Scheinwerfergehäuse besteht im Wesentlichen aus einem Kunststoff, da das Fahrzeuggewicht durch den Scheinwerfer nicht unnötig erhöht werden soll. Den notwendigen Halt und eine ausreichende Steifigkeit erhält das Scheinwerfergehäuse, indem es in einen geschlossenen, das Gehäuse allseitig umfassenden Rahmen in der Fahrzeugkarosserie z. B. in der Fahrzeugfront eingesetzt wird. Insbesondere wenn die Scheinwerfer sehr weit außen am Fahrzeug angebracht werden, kann es unter Umständen problematisch sein, einen solchen geschlossenen Rahmen in der Fahrzeugkarosserie zu realisieren. Außerdem ist die Montage des Scheinwerfergehäuses zumeist umständlich.

Die Erfindung beruht somit auf dem Problem eine Fahrzeugkarosserie mit einer Aufnahme für das Scheinwerfergehäuse zu schaffen, bei dem das Scheinwerfergehäuse leicht zu montieren ist. Dafür notwendige Änderungen an der Fahrzeugkarosserie sollen nicht dazu führen, dass die Steifigkeit der Karosserie leidet. Außerdem muss weiterhin eine stabile Ausrichtung des Scheinwerfergehäuses in der Fahrzeugkarosserie gewährleistet sein.

Zur Lösung des Problems sieht die Erfindung eine Fahrzeugkarosserie gemäß dem Oberbegriff des Anspruchs 1 vor, die dadurch gekennzeichnet ist, dass die Frontstrebe in etwa in einer gedachten Längsverlängerung der Seitenstrebe endet und dass zwischen dem Ende der Seitenstrebe und der Frontstrebe eine Lücke vorhanden ist, in der die sich im Wesentlichen in Fahrzeuglängsrichtung erstreckende Strukturstrebe des Scheinwerfergehäuses die Lücke überbrückend eingesetzt ist und dass die Enden der Frontstrebe und der Seitenstrebe über jeweils eine Hochstütze an dem Längsträger befestigt sind und dass der Längsträger und die beiden Hochstützen den teiloffenen Rahmen zur Aufnahme des Scheinwerfergehäuses bilden.

Auf diese Weise wird ein eine Stützfunktion ausübendes Teil der Fahrzeugkarosserie im Scheinwerfergehäuse integriert. Erst mit dem Einbau des mit einer Strukturstrebe versehenen Scheinwerfergehäuses wird somit die Karosserie komplettiert. Dies vereinfacht die Montage, da die Laschen leicht zugänglich sind und nicht innerhalb des geschlossenen Rahmens an der Fahrzeugkarosserie liegen. Auch der Zusammenbau der Fahrzeugkarosserie wird vereinfacht, da der Rahmen, solange das Scheinwerfergehäuse noch nicht eingebaut ist, teiloffen ist, so dass alle Schweißpunkte leicht zu erreichen sind.

Vorzugsweise kann die Grundplatte hängend an der Strukturstrebe befestigt sein. Dies hat den Vorteil, dass das Scheinwerfergehäuse ausschließlich mit den Laschen der Strukturstrebe an der Fahrzeugkarosserie befestigt ist, d. h. es brauchen nur zwei Befestigungsoperationen durchgeführt werden. Da die Strukturstrebe eine gewisse Festigkeit benötigt, um die Karosserie zu versteifen, kann sie auch dem Scheinwerfergehäuse eine Stabilität geben, die für eine stets exakte Ausrichtung der Grundplatte notwendig ist.

Die Strukturstrebe kann einteilig mit dem Scheinwerfergehäuse ausgebildet sein. Dies hat den Vorteil, dass Gehäuse und Strukturstrebe in einem Arbeitsgang zum Beispiel im Spritzgussverfahren hergestellt werden können.

Die Strukturstrebe kann aber auch ein gesondertes Bauteil sein, das in einer Führung am Scheinwerfergehäuse gehalten und befestigt ist.

Die Befestigungen der Laschen an der Karosserie können als Sollbruchstellen oder als Deformationselemente ausgelegt sein. Damit wird erreicht, dass z. B. bei einem Fußgängeraufprall die Karosserie leicht nachgibt, wenn wegen der an den Sollbruchstellen gelösten bzw. nachgebenden Befestigung die versteifende Wirkung der Strukturstrebe fehlt.

Je nach Einbaulage kann die Strukturstrebe selbst ein Deformationselement bilden, das sich bei einem Aufprall verformt, sich z. B. durchbiegt und dabei Bewegungsenergie aufnimmt.

Gemäß der Erfindung brauchen keine großen Änderungen an der Konstruktion einer vorhandenen Fahrzeugkarosserie vorgenommen zu werden. Lediglich die Seitenstrebe wird gekürzt, so dass sie sich nicht bis zur Front des Fahrzeuges erstreckt. Die verbleibende Lücke zur Frontstrebe wird durch die Strukturstrebe überbrückt.

Vorzugsweise wird die Strukturstrebe des Scheinwerfergehäuses mit dem teiloffenen Rahmen verschraubt.

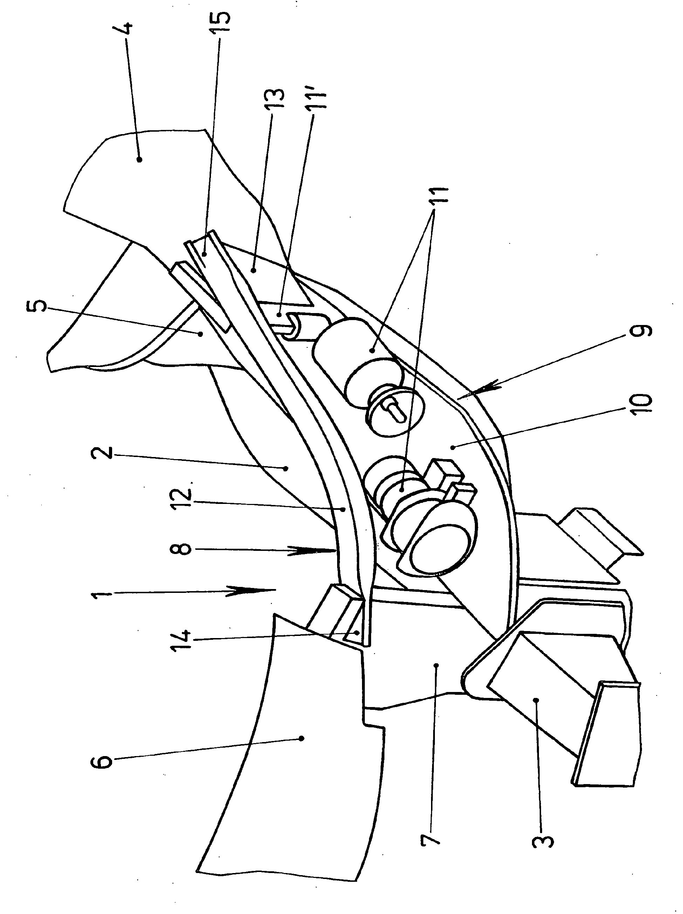

Zur Erläuterung der Erfindung zeigt die einzige Figur - zum Teil in schematischer Darstellung - die vordere linke Ecke einer Fahrzeugkarosserie mit einem eingesetzten Scheinwerfer.

Die Fahrzeugkarosserie 1 baut auf einen Längsträger 2 auf, der sich von der Fahrzeugfront (im vorderen Teil des Bildes) zur nicht gezeigten Fahrgastzelle erstreckt. An seinem vorderen Ende ist eine Crash-Box 3 befestigt, an der der vordere Stoßfänger angeschraubt wird.

Oberhalb und parallel zum Längsträger 2 erstreckt sich eine Seitenstrebe 4, die mit ihrem vorderen Ende über eine Hochstütze 5 am Längsträger 2 befestigt ist. Die Verbindung der Hochstütze 5 mit der Seitenstrebe 4 dient als Abstützpunkt für die Radaufhängung des nicht gezeigten linken Vorderrades.

Die Front des Fahrzeuges bildet eine Frontstrebe 6, die über eine weitere Hochstütze 7 am Ende des Längsträgers 2 befestigt ist.

Die beiden Hochstützen 5, 7 sowie der Längsträger 2 bilden einen U-förmigen, nach oben offenen und somit teiloffenen Rahmen 8 für ein Scheinwerfergehäuse 9. Die Rahmenfläche ist dabei nur leicht gegenüber einer Längsachse des Fahrzeuges geneigt, d. h., dass die Flächennormale im Wesentlichen zur Fahrzeugseite gerichtet ist.

Das Scheinwerfergehäuse 9, das nur zum Teil dargestellt ist, besteht aus einer Grundplatte 10, auf der sich mehrere Leuchtmittel 11 befinden, z. B. ein Scheinwerfer für Abblendlicht und ein Scheinwerfer für Fernlicht, in Modulbauweise. Über wenigstens einen Halter 11' ist die Grundplatte 10 mit einer Strukturstrebe 12 verbunden. Vor der Grundplatte 10 und vor der Strukturstrebe 12 befindet sich eine Streuscheibe 13, die hier schematisch angedeutet ist.

Die Strukturstrebe 12 ist ein integraler Bestand des Scheinwerfergehäuses 9. Entweder ist sie einteilig mit diesem ausgeführt oder in einer Führung im Scheinwerfergehäuse 9 gehalten. Auf jeden Fall wird die Strukturstrebe 12 mit dem Scheinwerfergehäuse 9 zusammen in den teiloffenen Rahmen 8 eingesetzt. Danach werden die beiden als Laschen 14, 15 ausgeformten Enden der Strukturstrebe 12 mit der Frontstrebe 6 bzw. mit der Seitenstrebe 4 verbunden. Damit schließt die Strukturstrebe den Rahmen 8 und wird zum Bestandteil der Fahrzeugkarosserie 1 und übernimmt eine Stützfunktion, die normalerweise von einem oberen Rahmenteil eines geschlossenen Rahmens ausgeübt wird.

Der Aufbau der Karosserie geschieht somit in der Weise, dass ein Teil der Fahrzeugkarosserie 1 zunächst mit dem Scheinwerfergehäuse 9 gebildet wird. Danach wird dieses Teil zusammen mit dem Scheinwerfergehäuse 9 in die Fahrzeugkarosserie 1 eingesetzt und dort befestigt, so dass ein geschlossener Rahmen für den Scheinwerfer entsteht.

### Bezugszeichenliste

- 1: Fahrzeugkarosserie
- 2: Längsträger
- 3: Crash-Box
- 4: Seitenstrebe
- 5: Hochstütze

- 6: Frontstrebe
- 7: Hochstütze
- 8: Rahmen
- 9: Scheinwerfergehäuse
- 10: Grundplatte

- 11: Leuchtmittel
- 12: Strukturstrebe
- 13: Streuscheibe
- 14: Lasche
- 15: Lasche

## Patentansprüche

1. Fahrzeugkarosserie mit einem Scheinwerfergehäuse, das mit einer Grundplatte (10) zur Aufnahme von Leuchtmitteln (11) und mit an den Enden einer Strukturstrebe (12) des Scheinwerfergehäuses (9) ausgebildeten Laschen (14, 15)versehen ist, mit denen das Scheinwerfergehäuse (9) in einem von der Fahrzeugkarosserie (1) gebildeten Rahmen (8) befestigbar ist, wobei die Strukturstrebe (12) so ausgelegt ist, dass sie im eingebauten Zustand des Scheinwerfergehäuses (9) einen teiloffenen ausgeführten Rahmen (8) der Fahrzeugkarosserie (1) vervollständigt und damit ein eine Stützfunktion ausübendes Teil der Fahrzeugkarosserie (1) bildet, und wobei die Fahrzeugkarosserie eine sich über die Fahrzeugfront erstreckende Frontstrebe (6), eine an einer Fahrzeugseite verlaufende Seitenstrebe (4), sowie einen sich von der Fahrzeugfront zur Fahrgastzelle erstreckenden Längsträger (2) aufweist, **dadurch gekennzeichnent,** dass die Frontstrebe (6) in etwa in einer gedachten Längsverlängerung der Seitenstrebe (4) endet und dass zwischen dem Ende der Seitenstrebe (4) und der Frontstrebe (6) eine Lücke vorhanden ist, in der die sich im Wesentlichen in Fahrzeuglängsrichtung erstreckende Strukturstrebe (12) des Scheinwerfergehäuses (9) die Lücke überbrückend eingesetzt ist und dass die Enden der Frontstrebe (6) und der Seitenstrebe (4) über jeweils eine Hochstütze (7, 5) an dem Längsträger (2) befestigt sind und dass der Längsträger (2) und die beiden Hochstützen (7, 5) den teiloffenen Rahmen (8) zur Aufnahme des Scheinwerfergehäuses (9) bilden.

2. Fahrzeugkarosserie nach Anspruch 1, **dadurch gekennzeichnet, dass** die Strukturstrebe (12) des Scheinwerfergehäuses (9) mit dem teiloffenen Rahmen (8) verschraubt ist.

3. Fahrzeugkarosserie nach einem der vorhergehenden Ansprüche, **dadurch gekennzeichnet, dass** die Grundplatte (10) hängend an der Strukturstrebe (12) befestigt ist.

4. Fahrzeugkarosserie nach einem der vorhergehenden Ansprüche, **dadurch gekennzeichnet, dass** die Strukturstrebe (12) einteilig mit dem Scheinwerfergehäuse (9) ausgebildet ist.

5. Fahrzeugkarosserie nach Anspruch 1 bis 3, **dadurch gekennzeichnet, dass** die Strukturstrebe (12) in einer Führung am Scheinwerfergehäuse (9) gehalten und befestigt ist.

6. Fahrzeugkarosserie nach einem der vorhergehenden Ansprüche, **dadurch gekennzeichnet, dass** die Befestigungen der Laschen (14, 15) Sollbruchstellen bilden.

7. Fahrzeugkarosserie nach einem der vorhergehenden Ansprüche, **dadurch gekennzeichnet, dass** die Strukturstrebe (12) ein Deformationselement ist.

## Claims

1. Vehicle body having a headlamp housing, which is provided with a base plate (10) for receiving lighting means (11) and with tongues (14, 15), which are formed on the ends of a structural strut (12) of the headlamp housing (9) and by which the headlamp housing (9) is fastenable in a frame (8) formed by the vehicle body (1), wherein the structural strut (12) is designed such that, in the fitted state of the headlamp housing (9), it completes a partially open frame (8) of the vehicle body (1) and hence forms a part of the vehicle body (1) that performs a support function, and wherein the vehicle body comprises a front strut (6) extending over the front of the vehicle, a lateral strut (4) running along a side of the vehicle, and a longitudinal beam (2) extending from the front of the vehicle to the passenger cell, **characterized in that** the front strut (6) terminates approximately in an imaginary longitudinal extension of the lateral strut (4) and that between the end of the lateral strut (4) and the front strut (6) there is a gap, in which the structural strut (12) of the headlamp housing (9) that extends substantially in vehicle longitudinal direction is inserted so as to bridge the gap, and that the ends of the front strut (6) and of the lateral strut (4) are fastened in each case by a vertical support (7, 5) to the longitudinal beam (2) and that the longitudinal beam (2) and the two vertical supports (7, 5) form the partially open frame (8) for receiving the headlamp housing (9).

2. Vehicle body according to claim 1, **characterized in that** the structural strut (12) of the headlamp housing (9) is screw-fastened to the partially open frame (8).

3. Vehicle body according to one of the preceding claims, **characterized in that** the base plate (10) is fastened in a suspended manner to the structural strut (12).

4. Vehicle body according to one of the preceding claims, **characterized in that** the structural strut (12) is formed integrally with the headlamp housing (9).

5. Vehicle body according to claim 1 to 3, **characterized in that** the structural strut (12) is held and fastened in a guide on the headlamp housing (9).

6. Vehicle body according to one of the preceding claims, **characterized in** hat the fastenings of the tongues (14, 15) form predetermined breaking points.

7. Vehicle body according to one of the preceding claims, **characterized in that** the structural strut (12) is a deformation element.

## Revendications

1. Carrosserie de véhicule comprenant un boîtier de projecteur, lequel est doté d'une plaque de base (10) pour la réception de moyens d'éclairage (11) et de pattes (14, 15) réalisées sur les extrémités d'un montant de structure (12) du boîtier de projecteur (9), pattes avec lesquelles le boîtier de projecteur (9) peut être fixé dans un cadre (8) formé par la carrosserie du véhicule (1), le montant de structure (12) étant conçu de telle sorte qu'il complète un cadre (8) réalisé semi-ouvert de la carrosserie du véhicule (1) lorsque le boîtier de projecteur (9) est monté et forme ainsi une partie, exerçant une fonction de soutien, de la carrosserie de véhicule (1), et la carrosserie de véhicule présentant un montant avant (6) s'étendant sur l'avant du véhicule, un montant latéral (4) agencé sur un côté du véhicule, ainsi qu'un longeron (2) s'étendant depuis l'avant du véhicule jusqu'à l'habitacle, **caractérisée en ce que** le montant avant (6) se termine à peu près dans un prolongement longitudinal imaginaire du montant latéral (4) et **en ce que** entre l'extrémité du montant latéral (4) et le montant avant (6) est présent un espace dans lequel le montant de structure (12), s'étendant sensiblement dans la direction longitudinale du véhicule, du boîtier de projecteur (9) est inséré en surmontant l'espace et **en ce que** les extrémités du montant avant (6) et du montant latéral (4) sont fixées sur le longeron (2) au moyen chacun d'un support surélevé (7, 5) et **en ce que** le longeron (2) et les deux supports surélevés (7, 5) forment le cadre (8) semi-ouvert pour le logement du boîtier de projecteur (9).

2. Carrosserie de véhicule selon la revendication 1, **caractérisée en ce que** le montant de structure (12) du boîtier de projecteur (9) est vissé avec le cadre (8) semi-ouveit.

3. Carrosserie de véhicule selon l'une quelconque des revendications précédentes, **caractérisée en ce que** la plaque de base (10) est fixée accrochée sur le montant de structure (12).

4. Carrosserie de véhicule selon l'une quelconque des revendications précédentes, **caractérisée en ce que** le montant de structure (12) est réalisé d'une seule pièce avec le boîtier de projecteur (9).

5. Carrosserie de véhicule selon les revendications 1 à 3, **caractérisée en ce que** le montant de structure (12) est maintenu et fixé dans un guide sur le boîtier de projecteur (9).

6. Carrosserie de véhicule selon l'une quelconque des revendications précédentes, **caractérisée en ce que** les fixations des pattes (14, 15) forment des points de rupture théorique.

7. Carrosserie de véhicule selon l'une quelconque des revendications précédentes, **caractérisée en ce que** le montant de structure (12) est un élément de déformation.
